# EUROPEAN PATENT APPLICATION

(11) **EP 3 816 234 A1**
(43) Date of publication of application: **05.05.2021**
(21) Application number: 19824980.7
(22) Date of filing: 18.06.2019
(51) Int. Cl.: C08L 101/00, C08K 3/016, C08K 3/40, C08L 83/04, C09K 21/02, C09K 21/04

(54) **FLAME RETARDANT MATERIAL**

(30) Priority: 27.06.2018 JP 2018121864; 06.06.2019 JP 2019105773
(71) Applicant: Nitto Denko Corporation, Ibaraki-shi, Osaka 567-8680 (JP)
(72) Inventor: SUGINO Yusuke, Ibaraki-shi, Osaka 567-8680 (JP); IMOTO Takashi, Ibaraki-shi, Osaka 567-8680 (JP); KAWANISHI Daisuke, Ibaraki-shi, Osaka 567-8680 (JP); KINOSHITA Mayu, Ibaraki-shi, Osaka 567-8680 (JP)
(74) Representative: Müller-Boré & Partner Patentanwälte PartG mbB
(86) International application number: PCT/JP2019/023988
(87) International publication number: WO 2020/004119

(57) **Abstract**

Provided is a novel flame retardant material excellent in flame retardancy. A flame retardant material according to one embodiment of the present invention is formed from a resin composition (A) including a binder resin, a low-melting point inorganic substance, and a high-melting point inorganic substance. A flame retardant material according to another embodiment of the present invention is formed from a resin composition (B) including a binder resin that produces a high-melting point inorganic substance when heated, and a low-melting point inorganic substance.

## Description

### Technical Field

The present invention relates to a flame retardant material.

### Background Art

One kind of safety that a building, a vehicle, or the like is required to have is, for example, flame retardancy. A flame retardant material has been proposed as a material for imparting such flame retardancy (e.g., Patent Literatures 1 to 4).

As a method of causing the flame retardant material to express the flame retardancy, there has been performed, for example, the mixing of a flame retardant in accordance with a use situation (e.g., a halogen-based flame retardant or an inorganic flame retardant), which is appropriately selected, into the flame retardant material, the use of a flame retardant resin in accordance with a use situation as a main component for the flame retardant material, or coating with a flame retardant paint (e.g., an inorganic paint).

The inventors of the present invention have made extensive investigations on a novel method by which the flame retardancy can be expressed. As a result, the inventors have found a novel mechanism via which the flame retardancy is expressed, and have established a method by which the mechanism can be achieved. Thus, the inventors have been able to provide a novel flame retardant material.

### Citation List

### Patent Literature

[PTL 1] JP 07-186333 A
[PTL 2] JP 4491778 B2
[PTL 3] JP 4539349 B2
[PTL 4] JP 2014-231597 A

### Summary of Invention

### Technical Problem

An object of the present invention is to provide a novel flame retardant material excellent in flame retardancy.

### Solution to Problem

According to one embodiment of the present invention, there is provided a flame retardant material, including a resin composition (A) including a binder resin, a low-melting point inorganic substance, and a high-melting point inorganic substance.

In one embodiment, a content of the low-melting point inorganic substance with respect to 100 parts by weight of the binder resin is from 100 parts by weight to 500 parts by weight in terms of solid content.

In one embodiment, a content of the high-melting point inorganic substance with respect to 100 parts by weight of the binder resin is from 10 parts by weight to 100 parts by weight in terms of solid content.

In one embodiment, a total content of the binder resin, the low-melting point inorganic substance, and the high-melting point inorganic substance in the resin composition (A) is from 80 wt% to 100 wt% in terms of solid content.

In one embodiment, the flame retardant material according to the one embodiment of the present invention is of a sheet shape having a thickness of from 20 µm to 3,000 µm.

In one embodiment, the binder resin is at least one kind selected from a thermoplastic resin, a thermosetting resin, and a rubber.

In one embodiment, the low-melting point inorganic substance is a glass frit.

In one embodiment, the glass frit is at least one kind selected from a phosphate-based glass frit, a borosilicate-based glass frit, and a bismuth-based glass frit.

In one embodiment, the high-melting point inorganic substance is at least one kind selected from boron nitride, alumina, zinc oxide, titanium oxide, silica, barium titanate, calcium carbonate, glass beads, aluminum hydroxide, silicone powder, a glass balloon, a silica balloon, and talc.

According to another embodiment of the present invention, there is provided a flame retardant material, including a resin composition (B) including a binder resin that produces a high-melting point inorganic substance when heated, and a low-melting point inorganic substance.

In one embodiment, a content of the low-melting point inorganic substance with respect to 100 parts by weight of the binder resin that produces the high-melting point inorganic substance when heated is from 100 parts by weight to 500 parts by weight in terms of solid content.

In one embodiment, a total content of the binder resin that produces the high-melting point inorganic substance when heated, and the low-melting point inorganic substance in the resin composition (B) is from 80 wt% to 100 wt% in terms of solid content.

In one embodiment, the flame retardant material according to the other embodiment of the present invention is of a sheet shape having a thickness of from 20 µm to 3,000 µm.

In one embodiment, the binder resin that produces the high-melting point inorganic substance when heated is a silicone resin.

In one embodiment, the low-melting point inorganic substance is a glass frit.

In one embodiment, the glass frit is at least one kind selected from a phosphate-based glass frit, a borosilicate-based glass frit, and a bismuth-based glass frit.

### Advantageous Effects of Invention

According to the present invention, the novel flame retardant material excellent in flame retardancy can be provided.

### Description of Embodiments

### <<<<1. Flame Retardant Material>>>>

A flame retardant material of one embodiment of the present invention is formed from a resin composition (A) including a binder resin, a low-melting point inorganic substance, and a high-melting point inorganic substance. In this description, the flame retardant material of this embodiment of the present invention is sometimes referred to as "flame retardant material (A)."

A flame retardant material of another embodiment of the present invention is formed from a resin composition (B) including a binder resin that produces a high-melting point inorganic substance when heated, and a low-melting point inorganic substance. In this description, the flame retardant material of this embodiment of the present invention is sometimes referred to as "flame retardant material (B) . "

The simple term "flame retardant material of the present invention" as used herein means that both of the flame retardant material (A) and the flame retardant material (B) are included. Any appropriate form, such as a flame retardant sheet (the term "sheet" includes the concept of a tape), a flame retardant coating agent, or a flame retardant composition, may be adopted as the form of the flame retardant material to the extent that the effect of the present invention is not impaired.

The flame retardant material (A) is formed from the resin composition (A), and hence can express excellent flame retardancy.

The flame retardant material (B) is formed from the resin composition (B), and hence can express excellent flame retardancy.

The flame retardant material (A) is a material formed from the resin composition (A), and any appropriate formation method may be adopted as a method of forming the material to the extent that the effect of the present invention is not impaired. Such formation method is, for example, a method including: applying the resin composition (A) onto any appropriate base material (e.g., a polyethylene terephthalate film) so that its thickness after drying may be a desired thickness; heating and drying the composition; and then peeling the base material to form the flame retardant material (A) of a sheet shape.

The flame retardant material (B) is a material formed from the resin composition (B), and any appropriate formation method may be adopted as a method of forming the material to the extent that the effect of the present invention is not impaired. Such formation method is, for example, a method including: applying the resin composition (B) onto any appropriate base material (e.g., a polyethylene terephthalate film) so that its thickness after drying may be a desired thickness; heating and drying the composition; and then peeling the base material to form the flame retardant material (B) of a sheet shape.

Each of the resin composition (A) and the resin composition (B) may be a solvent-based composition, may be an aqueous dispersion-based composition, or may be a solvent-free composition (e.g., a hot melt-type composition). For example, each of the compositions may be a paint composition.

A method of applying each of the resin composition (A) and the resin composition (B) is, for example, any appropriate application method, such as an applicator, kiss coating, gravure coating, bar coating, spray coating, knife coating, wire coating, dip coating, die coating, curtain coating, dispenser coating, screen printing, or metal mask printing.

The flame retardant material of the present invention is formed from the resin composition (A) or the resin composition (B). In this case, the resin composition (A) or the resin composition (B), which is a formation material for the flame retardant material of the present invention, and the composition of the flame retardant material of the present invention may not be identical to each other. For example, when the resin composition (A) is applied onto any appropriate base material so that its thickness after drying may be a desired thickness, followed by its heating and drying, at least part of the resin composition (A) causes a curing reaction in some cases . In such cases, the resin composition (A), which is a formation material for the flame retardant material (A), and the composition of the flame retardant material (A) are not identical to each other. Accordingly, there exists a situation in which it is difficult to specify the flame retardant material of the present invention on the basis of its own composition. In view of the foregoing, the specification of the flame retardant material of the present invention as a product is performed by specifying the resin composition (A) or the resin composition (B), which is a formation material for the flame retardant material of the present invention.

When the flame retardant material of the present invention is of a sheet shape, its thickness is preferably from 20 µm to 3,000 µm, more preferably from 40 µm to 2,000 µm, still more preferably from 60 µm to 1,000 µm, particularly preferably from 80 µm to 500 µm, most preferably from 100 µm to 300 µm. When the thickness falls within the ranges, the flame retardant material of the present invention can express the effect of the present invention to a larger extent. In the case where the flame retardant material is of a sheet shape, when its thickness is excessively small, the flame retardant material may be unable to express sufficient flame retardancy. In the case where the flame retardant material is of a sheet shape, when its thickness is excessively large, it may be difficult to treat the material as a sheet.

The flame retardant material of the present invention preferably has a gross calorific value per 10 minutes of 30 MJ/m² or less, a maximum heat generation rate of 300 kW/m² or less, and an ignition time of 60 seconds or more in a cone calorimeter test in conformity with ISO 5660-1:2002. When the results of the cone calorimeter test fall within the ranges, the flame retardant material of the present invention can express more excellent flame retardancy.

The weight loss of the flame retardant material of the present invention measured by thermogravimetric analysis including scanning the material under an air atmosphere at a rate of temperature increase of 50°C/min from room temperature to 1,000°C is preferably 48 wt% or less, more preferably from 1 wt% to 48 wt%, still more preferably from 5 wt% to 45 wt%, particularly preferably from 10 wt% to 40 wt%, most preferably from 15 wt% to 35 wt%. When the weight loss in the flame retardant material of the present invention falls within the ranges, the material can express more excellent flame retardancy.

The air permeability of the flame retardant material of the present invention measured with an Oken-type digital display-type air permeability-smoothness tester in conformity with JIS-P8117 is preferably 100 seconds or more, more preferably 500 seconds or more, still more preferably 1,000 seconds or more, particularly preferably 2,000 seconds or more, most preferably 3,000 seconds or more. When the air permeability in the flame retardant material of the present invention falls within the ranges, the material can express more excellent flame retardancy.

When the flame retardant material of the present invention is of a sheet shape, the material may include a protective layer on its surface to the extent that the effect of the present invention is not impaired.

A main component for the protective layer is preferably a polymer. The protective layer is preferably, for example, at least one selected from the group consisting of an ultraviolet light-curable hard coat layer, a thermosetting hard coat layer, and an organic-inorganic hybrid hard coat layer. Such protective layer may be formed only of one layer, or may be formed of two or more layers.

The ultraviolet light-curable hard coat layer may be formed from a resin composition containing an ultraviolet light-curable resin. The thermosetting hard coat layer may be formed from a resin composition containing a thermosetting resin. The organic-inorganic hybrid hard coat layer may be formed from a resin composition containing an organic-inorganic hybrid resin.

More specific examples of curable compounds to be used for the above-mentioned resins include a monomer, an oligomer, a polymer, and a silazane compound each having at least one kind selected from the group consisting of a silanol group, a precursor of a silanol group (for example, an alkoxysilyl group or a chlorosilyl group), an acryloyl group, a methacryloyl group, a cyclic ether group, an amino group, and an isocyanate group. Of those, a monomer, an oligomer, or a polymer having a silanol group is preferred from the viewpoint that its surface hardly carbonizes at the time of its combustion.

The resin composition capable of forming the hard coat layer may further contain any appropriate additive depending on purposes. Examples of such additive include a photoinitiator, a silane coupling agent, a release agent, a curing agent, a curing accelerator, a diluent, an age inhibitor, a denaturant, a surfactant, a dye, a pigment, a discoloration inhibitor, an ultraviolet absorber, a softener, a stabilizer, a plasticizer, and an antifoaming agent. The kinds, the number, and the amounts of the additives contained in the resin composition capable of forming the hard coat layer may be set as appropriate depending on purposes.

Any appropriate thickness can be adopted as the thickness of the protective layer to the extent that the effect of the present invention is not impaired. Such thickness is preferably from 0.1 µm to 200 µm, more preferably from 0.2 µm to 100 µm, still more preferably from 0.5 µm to 50 µm.

### <<1-1. Mechanism via which Flame Retardancy is expressed>>

The mechanism via which flame retardancy is expressed in the flame retardant material of the present invention is based on the following principle: when the flame retardant material is exposed to high temperature, a phase change occurs in the flame retardant material to form a flame retardant inorganic coating film, and the flame retardant inorganic coating film effectively blocks a flame, a combustion gas, or the like. An investigation on a component needed for the formation of the flame retardant inorganic coating film by the phase change has revealed the following.

When the three components, that is, the binder resin, the low-melting point inorganic substance, and the high-melting point inorganic substance are caused to coexist, and are exposed to high temperature, the binder resin thermally decomposes to disappear or to form a carbide. After that, when the low-melting point inorganic substance melts to liquefy, the low-melting point inorganic substance serves as a binder component for the high-melting point inorganic substance or the carbide to form a coating film. The formed coating film serves as a flame retardant coating film because all of the liquefied low-melting point inorganic substance and the high-melting point inorganic substance or the carbide are flame retardant substances.

When the two components, that is, the binder resin that produces the high-melting point inorganic substance when heated, and the low-melting point inorganic substance are caused to coexist, and are exposed to high temperature, part of the binder resin thermally decomposes to form the high-melting point inorganic substance as a residue. After that, when the low-melting point inorganic substance melts to liquefy, the low-melting point inorganic substance serves as a binder component for the high-melting point inorganic substance to form a coating film. The formed coating film serves as a flame retardant coating film because all of the liquefied low-melting point inorganic substance and the high-melting point inorganic substance are flame retardant substances.

### <<1-2. Resin Composition (A)>>

The flame retardant material (A) is formed from the resin composition (A) including the binder resin, the low-melting point inorganic substance, and the high-melting point inorganic substance. That is, the resin composition (A) includes the binder resin, the low-melting point inorganic substance, and the high-melting point inorganic substance. The binder resins may be used alone or in combination thereof. The low-melting point inorganic substances may be used alone or in combination thereof . The high-melting point inorganic substances may be used alone or in combination thereof.

The total content of the binder resin, the low-melting point inorganic substance, and the high-melting point inorganic substance in the resin composition (A) is preferably from 80 wt% to 100 wt%, more preferably from 85 wt% to 100 wt%, still more preferably from 90 wt% to 100 wt%, particularly preferably from 95 wt% to 100 wt%, most preferably from 98 wt% to 100 wt% in terms of solid content. When the total content of the binder resin, the low-melting point inorganic substance, and the high-melting point inorganic substance in the resin composition (A) falls within the ranges in terms of solid content, the flame retardant material (A) can express the effect of the present invention to a larger extent. When the total content of the binder resin, the low-melting point inorganic substance, and the high-melting point inorganic substance in the resin composition (A) is excessively small in terms of solid content, the flame retardant material may be unable to express sufficient flame retardancy.

The content of the low-melting point inorganic substance with respect to 100 parts by weight of the binder resin in the resin composition (A) is preferably from 100 parts by weight to 500 parts by weight, more preferably from 110 parts by weight to 400 parts by weight, still more preferably from 120 parts by weight to 350 parts by weight, particularly preferably from 130 parts by weight to 300 parts by weight, most preferably from 140 parts by weight to 250 parts by weight in terms of solid content. When the content of the low-melting point inorganic substance with respect to 100 parts by weight of the binder resin in the resin composition (A) falls within the ranges in terms of solid content, the flame retardant material (A) can express the effect of the present invention to a larger extent. When the content of the low-melting point inorganic substance with respect to 100 parts by weight of the binder resin in the resin composition (A) deviates from the ranges in terms of solid content, the flame retardant material may be unable to express sufficient flame retardancy.

The content of the high-melting point inorganic substance with respect to 100 parts by weight of the binder resin in the resin composition (A) is preferably from 10 parts by weight to 100 parts by weight, more preferably from 13 parts by weight to 80 parts by weight, still more preferably from 16 parts by weight to 70 parts by weight, particularly preferably from 18 parts by weight to 60 parts by weight, most preferably from 20 parts by weight to 50 parts by weight in terms of solid content. When the content of the high-melting point inorganic substance with respect to 100 parts by weight of the binder resin in the resin composition (A) falls within the ranges in terms of solid content, the flame retardant material (A) can express the effect of the present invention to a larger extent. When the content of the high-meltingpoint inorganic substance with respect to 100 parts by weight of the binder resin in the resin composition (A) deviates from the ranges in terms of solid content, the flame retardant material may be unable to express sufficient flame retardancy.

The resin composition (A) may include any appropriate other component in addition to the binder resin, the low-melting point inorganic substance, and the high-melting point inorganic substance to the extent that the effect of the present invention is not impaired. Such other components may be used alone or in combination thereof. Examples of such other component include a solvent, a cross-linking agent, a pigment, a dye, a leveling agent, a plasticizer, a thickener, a drying agent, an antifoaming agent, a foaming agent, a carbonization accelerator, and a rust inhibitor.

### <1-2-1. Binder Resin>

Any appropriate binder resin may be adopted as the binder resin to the extent that the effect of the present invention is not impaired. The binder resins may be used alone or in combination thereof . Such binder resin is preferably at least one kind selected from a thermoplastic resin, a thermosetting resin, and a rubber because the effect of the present invention can be expressed to a larger extent.

Any appropriate thermoplastic resin may be adopted as the thermoplastic resin to the extent that the effect of the present invention is not impaired. The thermoplastic resins may be used alone or in combination thereof. Examples of such thermoplastic resin include a general-purpose plastic, an engineering plastic, and a super engineering plastic.

Examples of the general-purpose plastic include: polyolefins, such as polyethylene and polypropylene; vinyl chloride-based resins, such as polyvinyl chloride (PVC) and a vinylidene chloride resin (PVDC); acrylic resins, such as polymethyl methacrylate; styrene-based resins, such as polystyrene, an ABS resin, an AS resin, an AAS resin, an ACS resin, an AES resin, a MS resin, a SMA resin, and a MBS resin; polyesters, such as polyethylene terephthalate, polyethylene naphthalate, and polybutylene terephthalate; alkyd resins; and unsaturated polyester resins.

Examples of the engineering plastic include: polyamides (nylons), such as nylon 6, nylon 66, nylon 610, nylon 11, and nylon 12; polyethers, such as polyacetal (POM) and polyphenylene ether (PPE); and polycarbonates.

Examples of the super engineering plastic include: fluorine-based resins, such as polyvinylidene fluoride (PVDF); sulfur-containing polymers, such as polyphenylene sulfide (PPS) and polyether sulfone (PES) ; polyimide (PI) ; polyamide-imide (PAI) ; polyetherimide (PEI); and polyether ether ketone (PEEK).

Any appropriate thermosetting resin may be adopted as the thermosetting resin to the extent that the effect of the present invention is not impaired. The thermosetting resins may be used alone or in combination thereof. Examples of such thermosetting resin include: silicone resins; urethane resins; vinyl ester resins; phenoxy resins; epoxy resins; amino resins, such as a urea resin, a melamine resin, and a benzoguanamine resin; phenol resins; acrylic urethane resins; and acrylic silicone resins.

Any appropriate rubber may be adopted as the rubber to the extent that the effect of the present invention is not impaired. The rubbers may be used alone or in combination thereof. Examples of such rubber include a natural rubber (NR) and a synthetic rubber.

Examples of the synthetic rubber include a styrene-isoprene block polymer (SIS), an isoprene rubber (IR), a butadiene rubber (BR), a styrene-butadiene rubber (SBR), a chloroprene rubber (CR), a nitrile rubber (NBR), a butyl rubber (IIR), polyisobutylene (PIB), an ethylene-propylene rubber (e.g., EPM or EPDM), chlorosulfonated polyethylene (CSM), an acrylic rubber (ACM), a fluorine rubber (FKM), an epichlorohydrin rubber (CO), a urethane rubber (e.g. , AU or EU), and a silicone rubber (e.g., FMQ, FMVQ, MQ, PMQ, PVMQ, or VMQ).

### <1-2-2. Low-melting Point Inorganic Substance>

Any appropriate low-melting point inorganic substance may be adopted as the low-melting point inorganic substance to the extent that the effect of the present invention is not impaired. The low-melting point inorganic substances may be used alone or in combination thereof. Such low-melting point inorganic substance is preferably an inorganic substance that melts at a temperature of 1, 100°C or less. Such low-melting point inorganic substance is preferably, for example, a glass frit because the effect of the present invention can be expressed to a larger extent. The glass frit is preferably at least one kind selected from a phosphate-based glass frit, a borosilicate-based glass frit, and a bismuth-based glass frit because the effect of the present invention can be expressed to a larger extent.

The yield point of the glass frit is preferably from 300°C to 700°C, more preferably from 300°C to 650°C, still more preferably from 300°C to 600°C. When the yield point of the glass frit falls within the ranges, the flame retardant material (A) can express the effect of the present invention to a larger extent.

The average particle diameter of the glass frit is preferably from 0.1 µm to 50 µm, more preferably from 0.5 µm to 45 µm, still more preferably from 1 µm to 40 µm, particularly preferably from 2 µm to 35 µm, most preferably from 3 µm to 30 µm. When the average particle diameter of the glass frit falls within the ranges, the flame retardant material (A) can express the effect of the present invention to a larger extent.

### <1-2-3. High-melting Point Inorganic Substance>

Any appropriate high-melting point inorganic substance may be adopted as the high-melting point inorganic substance to the extent that the effect of the present invention is not impaired. The high-melting point inorganic substances may be used alone or in combination thereof. Such high-melting point inorganic substance is preferably an inorganic substance that does not melt at a temperature of 1,100°C or less. Such high-melting point inorganic substance is preferably at least one kind selected from boron nitride, alumina, zinc oxide, titanium oxide, silica, barium titanate, calcium carbonate, glass beads, aluminum hydroxide, silicone powder, a glass balloon, a silica balloon, and talc because the effect of the present invention can be expressed to a larger extent.

The average particle diameter of the high-melting point inorganic substance is preferably from 0.01 µm to 50 µm, more preferably from 0.05 µm to 40 µm, still more preferably from 0.1 µm to 35 µm, particularly preferably from 0.5 µm to 30 µm, most preferably from 1 µm to 25 µm. When the average particle diameter of the high-melting point inorganic substance falls within the ranges, the flame retardant material (A) can express the effect of the present invention to a larger extent.

### <<1-3. Resin Composition (B)>>

The flame retardant material (B) is formed from the resin composition (B) including the binder resin that produces the high-melting point inorganic substance when heated, and the low-melting point inorganic substance. That is, the resin composition (B) includes the binder resin that produces the high-melting point inorganic substance when heated, and the low-melting point inorganic substance. The binder resins that each produce the high-melting point inorganic substance when heated may be used alone or in combination thereof. The low-melting point inorganic substances may be used alone or in combination thereof. The high-melting point inorganic substances may be used alone or in combination thereof.

The total content of the binder resin that produces the high-melting point inorganic substance when heated, and the low-melting point inorganic substance in the resin composition (B) is preferably from 80 wt% to 100 wt%, more preferably from 85 wt% to 100 wt%, still more preferably from 90 wt% to 100 wt%, particularly preferably from 95 wt% to 100 wt%, most preferably from 98 wt% to 100 wt% in terms of solid content. When the total content of the binder resin that produces the high-melting point inorganic substance when heated, and the low-melting point inorganic substance in the resin composition (B) falls within the ranges in terms of solid content, the flame retardant material (B) can express the effect of the present invention to a larger extent. When the total content of the binder resin that produces the high-melting point inorganic substance when heated, and the low-melting point inorganic substance in the resin composition (B) is excessively small in terms of solid content, the flame retardant material may be unable to express sufficient flame retardancy.

The content of the low-melting point inorganic substance with respect to 100 parts by weight of the binder resin that produces the high-melting point inorganic substance when heated in the resin composition (B) is preferably from 100 parts by weight to 500 parts by weight, more preferably from 110 parts by weight to 450 parts by weight, still more preferably from 120 parts by weight to 400 parts by weight, particularly preferably from 130 parts by weight to 350 parts by weight, most preferably from 140 parts by weight to 300 parts by weight in terms of solid content. When the content of the low-melting point inorganic substance with respect to 100 parts by weight of the binder resin that produces the high-melting point inorganic substance when heated in the resin composition (B) falls within the ranges in terms of solid content, the flame retardant material (B) can express the effect of the present invention to a larger extent. When the content of the low-melting point inorganic substance with respect to 100 parts by weight of the binder resin that produces the high-melting point inorganic substance when heated in the resin composition (B) deviates from the ranges in terms of solid content, the flame retardant material may be unable to express sufficient flame retardancy.

The resin composition (B) may include any appropriate other component in addition to the binder resin that produces the high-melting point inorganic substance when heated, and the low-melting point inorganic substance to the extent that the effect of the present invention is not impaired. Such other components may be used alone or in combination thereof. Examples of such other component include a solvent, a cross-linking agent, a high-melting point inorganic substance, a pigment, a dye, a leveling agent, a plasticizer, a thickener, a drying agent, an antifoaming agent, a foaming agent, a carbonization accelerator, and a rust inhibitor.

### <1-3-1. Binder Resin that produces High-melting Point Inorganic Substance when heated>

Any appropriate binder resin that produces a high-melting point inorganic substance when heated may be adopted as the binder resin that produces the high-melting point inorganic substance when heated to the extent that the effect of the present invention is not impaired. The binder resins that each produce the high-melting point inorganic substance when heated may be used alone or in combination thereof. Such binder resin that produces the high-melting point inorganic substance when heated is preferably a silicone resin because the effect of the present invention can be expressed to a larger extent.

Any appropriate silicone resin may be adopted as the silicone resin to the extent that the effect of the present invention is not impaired. Examples of such silicone resin include an addition reaction-type silicone, a condensation reaction-type silicone, a silicone resin, and a silicone rubber.

When the silicone resin is adopted as the binder resin that produces the high-melting point inorganic substance when heated, in the case where the silicone resin is exposed to high temperature, part of the silicone thermally decomposes to form silica as a residue. After that, when the low-melting point inorganic substance melts to liquefy, the low-melting point inorganic substance serves as a binder component for the silica to form a coating film. The formed coating film serves as a flame retardant coating film because all of the liquefied low-melting point inorganic substance and the silica are flame retardant substances.

### <1-3-2. Low-melting Point Inorganic Substance>

The description in the section <1-2-2. Low-melting Point Inorganic Substance> may be incorporated for the low-melting point inorganic substance in the resin composition (B).

### <<<<2. Applications>>>>

The flame retardant material of the present invention may be utilized as an interior member for a transporting machine, such as a railway vehicle, an aircraft, an automobile, a ship, an elevator, or an escalator (interior member for a transporting machine), an exterior member for a transporting machine, a building material member, a display member, a household electric appliance member, or an electronic circuit member because the material can express excellent flame retardancy. In addition, the material may be suitably utilized as a lighting cover, in particular, a lighting cover serving as an interior member for a transporting machine.

### Examples

Now, the present invention is more specifically described by way of Examples and Comparative Examples. However, the present invention is by no means limited thereto. In the following description, "part(s)" and "%" are by weight unless otherwise specified.

### <Combustion Test>

A flame from a gas burner was brought into contact with a flame retardant material or a material, which had been cut into a sheet shape having a width of 15 mm and a length of 50 mm, for 10 seconds. The shape and strength of the flame retardant material or the material after the flame contact were evaluated by the following criteria.

### (Shape)

○: The flame retardant material or the material maintains its sheet shape, and does not deform.
Δ: The flame retardant material or the material maintains its sheet shape, and but deforms.
×: The flame retardant material or the material cannot maintain its sheet shape.

### (Strength)

○: The flame retardant material or the material maintains its sheet shape when dropped from a height of 10 cm.
×: The flame retardant material or the material cannot maintain its sheet shape when dropped from a height of 10 cm.

### <Weight Loss Measurement>

A sample was set in a thermogravimetric analysis (TGA) measuring apparatus, and measurement was performed by scanning the sample under an air atmosphere at a rate of temperature increase of 50°C/min from room temperature to 1,000°C, followed by the determination of the magnitude of its weight loss at 1,000°C.

### <Air Permeability Measurement>

Measurement was performed by a test method including using an Oken-type digital display-type air permeability-smoothness tester (model: EG. 6) manufactured by Asahi Seiko Co., Ltd. in conformity with JIS-P8117.

### [Synthesis Example 1]

80 Parts by weight of a synthetic rubber (product name: Quintac 3520, manufactured by Zeon Corporation), 20 parts by weight of silica (product name: AEROSIL RX 200, manufactured by Nippon Aerosil Co. , Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (A-1).

### [Synthesis Example 2]

80 Parts by weight of a synthetic rubber (product name: Quintac 3520, manufactured by Zeon Corporation), 20 parts by weight of aluminum hydroxide (product name: BF013, manufactured by Nippon Light Metal Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (B-1).

### [Synthesis Example 3]

80 Parts by weight of a synthetic rubber (product name: Quintac 3520, manufactured by Zeon Corporation), 20 parts by weight of talc (product name: Imported Talc, manufactured by Maruo Calcium Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (C-1).

### [Synthesis Example 4]

80 Parts by weight of a synthetic rubber (product name: Quintac 3520, manufactured by Zeon Corporation), 20 parts by weight of calcium carbonate (product name: Heavy Calcium Carbonate, manufactured by Maruo Calcium Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (D-1).

### [Synthesis Example 5]

80 Parts by weight of a synthetic rubber (product name: Quintac 3520, manufactured by Zeon Corporation), 20 parts by weight of glass beads (product name: CF0018WB15-01, manufactured by Nippon Frit Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (E-1).

### [Synthesis Example 6]

80 Parts by weight of a synthetic rubber (product name: Quintac 3520, manufactured by Zeon Corporation), 20 parts by weight of titanium oxide (product name: TITONE R-42, manufactured by Sakai Chemical Industry Co., Ltd.), 200 parts by weight of a phosphate-based glass frit (product name: VY0053M, manufactured by Nippon Frit Co. , Ltd.), and 300 parts by weight of toluene were added to a vessel including a stirring machine, and were stirred and mixed to provide a synthetic rubber composition (F-1).

### [Synthesis Example 7]

80 Parts by weight of a synthetic rubber (product name: Quintac 3520, manufactured by Zeon Corporation), 20 parts by weight of aluminum oxide (product name: TITONE R-42, manufactured by Sakai Chemical Industry Co., Ltd.), 200 parts by weight of a phosphate-based glass frit (product name: VY0053M, manufactured by Nippon Frit Co. , Ltd.), and 300 parts by weight of toluene were added to a vessel including a stirring machine, and were stirred and mixed to provide a synthetic rubber composition (G-1).

### [Synthesis Example 8]

80 Parts by weight of a synthetic rubber (product name: Quintac 3520, manufactured by Zeon Corporation), 20 parts by weight of silicone powder (product name: KMP-600, manufactured by Shin-Etsu Chemical Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (H-1).

### [Synthesis Example 9]

80 Parts by weight of a natural rubber (product name: Natural Rubber (INT No. 1 RSS), manufactured by Toyota Tsusho Corporation), 20 parts by weight of silica (product name: AEROSIL RX 200, manufactured by Nippon Aerosil Co., Ltd.), 200 parts by weight of a phosphate-based glass frit (product name: VY0053M, manufactured by Nippon Frit Co., Ltd.), and 700 parts by weight of toluene were added to a vessel including a stirring machine, and were stirred and mixed to provide a natural rubber composition (A-1).

### [Synthesis Example 10]

266 Parts by weight of an acrylic rubber (product name: SK-Dyne 1429 DTB, solid content concentration: 30%, manufactured by Soken Chemical & Engineering Co., Ltd.), 20 parts by weight of silica (product name: AEROSIL RX 200, manufactured by Nippon Aerosil Co. , Ltd.), 200 parts by weight of a phosphate-based glass frit (product name: VY0053M, manufactured by Nippon Frit Co., Ltd.), and 114 parts by weight of toluene were added to a vessel including a stirring machine, and were stirred and mixed to provide an acrylic rubber composition (A-1).

### [Synthesis Example 11]

80 Parts by weight of a vinyl chloride resin (product name: Shin-Etsu PVC TK-1300, manufactured by Shin-Etsu Chemical Co., Ltd.), 20 parts by weight of silica (product name: AEROSIL RX 200, manufactured by Nippon Aerosil Co., Ltd.), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a vinyl chloride resin composition (A-1).

### [Synthesis Example 12]

160 Parts by weight of a nylon resin (product name: AQ NYLON P-95, solid content concentration: 50%, manufactured by Toray Industries, Inc.), 20 parts by weight of silica (product name : AEROSIL RX 200, manufactured by Nippon Aerosil Co., Ltd.), 200 parts by weight of a phosphate-based glass frit (product name: VY0053M, manufactured by Nippon Frit Co., Ltd.), and 220 parts by weight of distilled water were added to a vessel including a stirring machine, and were stirred and mixed to provide a nylon resin composition (A-1).

### [Synthesis Example 13]

195 Parts by weight of a fluorine resin (product name: Obbligato SS0057, solid content concentration: 41%, manufactured by AGC COAT-TECH Co., Ltd.), 20 parts by weight of silica (product name: AEROSIL RX 200, manufactured by Nippon Aerosil Co., Ltd.), 200 parts by weight of a phosphate-based glass frit (product name: VY0053M, manufactured by Nippon Frit Co., Ltd.), and 185 parts by weight of toluene were added to a vessel including a stirring machine, and were stirred and mixed to provide a fluorine resin composition (A-1).

### [Synthesis Example 14]

200 Parts by weight of anepoxyresin (product name: jER1256B40, solid content concentration: 40%, manufactured by Mitsubishi Chemical Corporation), 40 parts by weight of a curing agent (product name: IBMI 12, manufactured by Mitsubishi Chemical Corporation), 20 parts by weight of silica (product name: AEROSIL RX 200, manufactured by Nippon Aerosil Co., Ltd.), 200 parts by weight of a phosphate-based glass frit (product name: VY0053M, manufactured by Nippon Frit Co., Ltd.), and 180 parts by weight of MEK were added to a vessel including a stirring machine, and were stirred and mixed to provide an epoxy resin composition (A-1).

### [Synthesis Example 15]

80 Parts by weight of a synthetic rubber (product name: Quintac 3520, manufactured by Zeon Corporation), 20 parts by weight of silica (product name: AEROSIL RX 200, manufactured by Nippon Aerosil Co. , Ltd.), 200 parts byweight of aborosilicate-basedglass frit (product name: CY5600, manufactured by Nippon Frit Co., Ltd.), and 700 parts by weight of toluene were added to a vessel including a stirring machine, and were stirred and mixed to provide a synthetic rubber composition (A-2).

### [Synthesis Example 16]

80 Parts by weight of a synthetic rubber (product name: Quintac 3520, manufactured by Zeon Corporation), 20 parts by weight of aluminum hydroxide (product name: BF013, manufactured by Nippon Light Metal Co., Ltd.), 200 parts by weight of a borosilicate-based glass frit (product name: CY5600, manufactured by Nippon Frit Co. , Ltd.), and 700 parts by weight of toluene were added to a vessel including a stirring machine, and were stirred and mixed to provide a synthetic rubber composition (B-2).

### [Synthesis Example 17]

80 Parts by weight of a synthetic rubber (product name: Quintac 3520, manufactured by Zeon Corporation), 20 parts by weight of talc (product name: Imported Talc, manufactured by Maruo Calcium Co., Ltd.), 200 parts by weight of aborosilicate-based glass frit (product name: CY5600, manufactured by Nippon Frit Co., Ltd.), and 700 parts by weight of toluene were added to a vessel including a stirring machine, and were stirred and mixed to provide a synthetic rubber composition (C-2).

### [Synthesis Example 18]

80 Parts by weight of a synthetic rubber (product name: Quintac 3520, manufactured by Zeon Corporation), 20 parts byweight of calcium carbonate (product name: Heavy Calcium Carbonate, manufactured by Maruo Calcium Co., Ltd.), 200 parts by weight of a borosilicate-based glass frit (product name: CY5600, manufactured by Nippon Frit Co., Ltd.), and 700 parts by weight of toluene were added to a vessel including a stirring machine, and were stirred and mixed to provide a synthetic rubber composition (D-2).

### [Synthesis Example 19]

80 Parts by weight of a synthetic rubber (product name: Quintac 3520, manufactured by Zeon Corporation), 20 parts by weight of glass beads (product name: CF0018WB15-01, manufactured by Nippon Frit Co., Ltd.), 200 parts by weight of a borosilicate-based glass frit (product name: CY5600, manufactured by Nippon Frit Co., Ltd.), and 700 parts by weight of toluene were added to a vessel including a stirring machine, and were stirred and mixed to provide a synthetic rubber composition (E-2).

### [Synthesis Example 20]

80 Parts by weight of a synthetic rubber (product name: Quintac 3520, manufactured by Zeon Corporation), 20 parts by weight of titanium dioxide (product name: TITONE R-42, manufactured by Sakai Chemical Industry Co., Ltd.), 200 parts by weight of a borosilicate-based glass frit (product name: CY5600, manufactured by Nippon Frit Co., Ltd.), and 700 parts by weight of toluene were added to a vessel including a stirring machine, and were stirred and mixed to provide a synthetic rubber composition (F-2).

### [Synthesis Example 21]

80 Parts by weight of a synthetic rubber (product name: Quintac 3520, manufactured by Zeon Corporation), 20 parts by weight of aluminum oxide (product name: TITONE R-42, manufactured by Sakai Chemical Industry Co., Ltd.), 200 parts by weight of a borosilicate-based glass frit (product name: CY5600, manufactured by Nippon Frit Co., Ltd.), and 700 parts by weight of toluene were added to a vessel including a stirring machine, and were stirred and mixed to provide a synthetic rubber composition (G-2).

### [Synthesis Example 22]

80 Parts by weight of a synthetic rubber (product name: Quintac 3520, manufactured by Zeon Corporation), 20 parts by weight of silicone powder (product name: KMP-600, manufactured by Shin-Etsu Chemical Co., Ltd.), 200 parts by weight of a borosilicate-based glass frit (product name: CY5600, manufactured by Nippon Frit Co. , Ltd.), and 700 parts by weight of toluene were added to a vessel including a stirring machine, and were stirred and mixed to provide a synthetic rubber composition (H-2).

### [Synthesis Example 23]

80 Parts by weight of a natural rubber (product name: Natural Rubber (INT No. 1 RSS), manufactured by Toyota Tsusho Corporation), 20 parts by weight of silica (product name: AEROSIL RX 200, manufactured by Nippon Aerosil Co., Ltd.), 200 parts by weight of a borosilicate-based glass frit (product name: CY5600, manufactured by Nippon Frit Co., Ltd.), and 700 parts by weight of toluene were added to a vessel including a stirring machine, and were stirred and mixed to provide a natural rubber composition (A-2).

### [Synthesis Example 24]

266 Parts by weight of an acrylic rubber (product name: SK-Dyne 1429 DTB, solid content concentration: 30%, manufactured by Soken Chemical & Engineering Co., Ltd.), 20 parts by weight of silica (product name: AEROSIL RX 200, manufactured by Nippon Aerosil Co. , Ltd.), 200 parts by weight of aborosilicate-basedglass frit (product name: CY5600, manufactured by Nippon Frit Co., Ltd.), and 114 parts by weight of toluene were added to a vessel including a stirring machine, and were stirred and mixed to provide an acrylic rubber composition (A-2).

### [Synthesis Example 25]

80 Parts by weight of a vinyl chloride resin (product name: Shin-Etsu PVCTK-1300, manufactured by Shin-Etsu Chemical Co., Ltd.), 20 parts by weight of silica (product name: AEROSIL RX 200, manufactured by Nippon Aerosil Co., Ltd.), 200 parts by weight of a borosilicate-based glass frit (product name: CY5600, manufactured by Nippon Frit Co., Ltd.), and 300 parts by weight of toluene were added to a vessel including a stirring machine, and were stirred and mixed to provide a vinyl chloride resin composition (A-2).

### [Synthesis Example 26]

160 Parts by weight of a nylon resin (product name: AQ NYLON P-95, solid content concentration: 50%, manufactured by Toray Industries, Inc.), 20 parts by weight of silica (product name: AEROSIL RX 200, manufactured by Nippon Aerosil Co., Ltd.), 200 parts by weight of a borosilicate-based glass frit (product name: CY5600, manufactured by Nippon Frit Co., Ltd.), and 220 parts by weight of distilled water were added toa vessel including a stirring machine, and were stirred and mixed to provide a nylon resin composition (A-2) .

### [Synthesis Example 27]

195 Parts by weight of a fluorine resin (product name: Obbligato SS0057, solid content concentration: 41%, manufactured by AGC COAT-TECH Co., Ltd.), 20 parts by weight of silica (product name: AEROSIL RX 200, manufactured by Nippon Aerosil Co., Ltd.), 200 parts by weight of a borosilicate-based glass frit (product name: CY5600, manufactured by Nippon Frit Co., Ltd.), and 185 parts by weight of toluene were added to a vessel including a stirring machine, and were stirred and mixed to provide a fluorine resin composition (A-2) .

### [Synthesis Example 28]

200 Parts byweight of an epoxyresin (product name: jER 1256B40, solid content concentration: 40%, manufactured by Mitsubishi Chemical Corporation), 40 parts by weight of a curing agent (product name: IBMI 12, manufactured by Mitsubishi Chemical Corporation), 20 parts by weight of silica (product name: AEROSIL RX 200, manufactured by Nippon Aerosil Co., Ltd.), 200 parts by weight of a borosilicate-based glass frit (product name: CY5600, manufactured by Nippon Frit Co., Ltd.), and 180 parts by weight of MEK were added to a vessel including a stirring machine, and were stirred and mixed to provide an epoxy resin composition (A-2).

### [Synthesis Example 29]

100 Parts by weight of a synthetic rubber (product name: Quintac 3520, manufactured by Zeon Corporation), 200 parts by weight of a phosphate-based glass frit (product name: VY0053M, manufactured by Nippon Frit Co., Ltd.), and 300 parts by weight of toluene were added to a vessel including a stirring machine, and were stirred and mixed to provide a synthetic rubber composition (I).

### [Synthesis Example 30]

80 Parts by weight of a synthetic rubber (product name: Quintac 3520, manufactured by Zeon Corporation), 20 parts by weight of silica (product name: AEROSIL RX 200, manufactured by Nippon Aerosil Co. , Ltd.), and 100 parts by weight of toluene were added to a vessel including a stirring machine, and were stirred and mixed to provide a synthetic rubber composition (J).

### [Example 1]

The synthetic rubber composition (A-1) obtained in Synthesis Example 1 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (1) was obtained. The results are shown in Table 1 and Table 2.

### [Example 2]

The synthetic rubber composition (B-1) obtained in Synthesis Example 2 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (2) was obtained. The results are shown in Table 1 and Table 2.

### [Example 3]

The synthetic rubber composition (C-1) obtained in Synthesis Example 3 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (3) was obtained. The results are shown in Table 1 and Table 2.

### [Example 4]

The synthetic rubber composition (D-1) obtained in Synthesis Example 4 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (4) was obtained. The results are shown in Table 1 and Table 2.

### [Example 5]

The synthetic rubber composition (E-1) obtained in Synthesis Example 5 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (5) was obtained. The results are shown in Table 1 and Table 2.

### [Example 6]

The synthetic rubber composition (F-1) obtained in Synthesis Example 6 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (6) was obtained. The results are shown in Table 1 and Table 2.

### [Example 7]

The synthetic rubber composition (G-1) obtained in Synthesis Example 7 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (7) was obtained. The results are shown in Table 1 and Table 2.

### [Example 8]

The synthetic rubber composition (H-1) obtained in Synthesis Example 8 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (8) was obtained. The results are shown in Table 1 and Table 2.

### [Example 9]

The natural rubber composition (A-1) obtained in Synthesis Example 9 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (9) was obtained. The results are shown in Table 1 and Table 2.

### [Example 10]

The acrylic rubber composition (A-1) obtained in Synthesis Example 10 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (10) was obtained. The results are shown in Table 1 and Table 2.

### [Example 11]

The vinyl chloride resin composition (A-1) obtained in Synthesis Example 11 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (11) was obtained. The results are shown in Table 1 and Table 2.

### [Example 12]

The nylon resin composition (A-1) obtained in Synthesis Example 12 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (12) was obtained. The results are shown in Table 1 and Table 2.

### [Example 13]

The fluorine resin composition (A-1) obtained in Synthesis Example 13 was applied onto a polyethylene terephthalate film (thickness: 50 µm, product name: LUMIRRORS10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (13) was obtained. The results are shown in Table 1 and Table 2.

### [Example 14]

The epoxy resin composition (A-1) obtained in Synthesis Example 14 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (14) was obtained. The results are shown in Table 1 and Table 2.

### [Example 15]

The synthetic rubber composition (A-2) obtained in Synthesis Example 15 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (15) was obtained. The results are shown in Table 1 and Table 2.

### [Example 16]

The synthetic rubber composition (B-2) obtained in Synthesis Example 16 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (16) was obtained. The results are shown in Table 1 and Table 2.

### [Example 17]

The synthetic rubber composition (C-2) obtained in Synthesis Example 17 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (17) was obtained. The results are shown in Table 1 and Table 2.

### [Example 18]

The synthetic rubber composition (D-2) obtained in Synthesis Example 18 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (18) was obtained. The results are shown in Table 1 and Table 2.

### [Example 19]

The synthetic rubber composition (E-2) obtained in Synthesis Example 19 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (19) was obtained. The results are shown in Table 1 and Table 2.

### [Example 20]

The synthetic rubber composition (F-2) obtained in Synthesis Example 20 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (20) was obtained. The results are shown in Table 1 and Table 2.

### [Example 21]

The synthetic rubber composition (G-2) obtained in Synthesis Example 21 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (21) was obtained. The results are shown in Table 1 and Table 2.

### [Example 22]

The synthetic rubber composition (H-2) obtained in Synthesis Example 22 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (22) was obtained. The results are shown in Table 1 and Table 2.

### [Example 23]

The natural rubber composition (A-2) obtained in Synthesis Example 23 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (23) was obtained. The results are shown in Table 1 and Table 2.

### [Example 24]

The acrylic rubber composition (A-2) obtained in Synthesis Example 24 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (24) was obtained. The results are shown in Table 1 and Table 2.

### [Example 25]

The vinyl chloride resin composition (A-2) obtained in Synthesis Example 25 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (25) was obtained. The results are shown in Table 1 and Table 2.

### [Example 26]

The nylon resin composition (A-2) obtained in Synthesis Example 26 was applied onto a polyethylene terephthalate film (thickness: 50 µm, product name : LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (26) was obtained. The results are shown in Table 1 and Table 2.

### [Example 27]

The fluorine resin composition (A-2) obtained in Synthesis Example 27 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (27) was obtained. The results are shown in Table 1 and Table 2.

### [Example 28]

The epoxy resin composition (A-2) obtained in Synthesis Example 28 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (28) was obtained. The results are shown in Table 1 and Table 2.

### [Comparative Example 1]

The synthetic rubber composition (I) obtained in Synthesis Example 29 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a material (C1) was obtained. The results are shown in Table 1 and Table 2.

### [Comparative Example 2]

The synthetic rubber composition (J) obtained in Synthesis Example 30 was applied onto a polyethylene terephthalate film (thickness: 50 µm, product name : LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a material (C2) was obtained. The results are shown in Table 1 and Table 2.

**Table 1**

| | Combustion test | | | Combustion test | |
|---|---|---|---|---|---|
| | Shape | Strength | | Shape | Strength |
| Example 1 | ○ | ○ | Example 16 | ○ | ○ |
| Example 2 | ○ | ○ | Example 17 | ○ | ○ |
| Example 3 | ○ | ○ | Example 18 | ○ | ○ |
| Example 4 | ○ | ○ | Example 19 | ○ | ○ |
| Example 5 | ○ | ○ | Example 20 | Δ | ○ |
| Example 6 | Δ | ○ | Example 21 | ○ | ○ |
| Example 7 | ○ | ○ | Example 22 | ○ | ○ |
| Example 8 | ○ | ○ | Example 23 | ○ | ○ |
| Example 9 | ○ | ○ | Example 24 | ○ | ○ |
| Example 10 | ○ | ○ | Example 25 | ○ | ○ |
| Example 11 | ○ | ○ | Example 26 | ○ | ○ |
| Example 12 | ○ | ○ | Example 27 | ○ | ○ |
| Example 13 | ○ | ○ | Example 28 | ○ | ○ |
| Example 14 | ○ | ○ | Comparative Example 1 | × | - |
| Example 15 | ○ | ○ | Comparative Example 2 | ○ | × |

**Table 2**

| | Weight loss (wt%) | Air permeability (second(s)) | | Weight loss (wt%) | Air permeability (second(s)) |
|---|---|---|---|---|---|
| Example 1 | 28 | - | Example 16 | 30 | - |
| Example 2 | 30 | - | Example 17 | 29 | - |
| Example 3 | 29 | - | Example 18 | 28 | - |
| Example 4 | 27 | - | Example 19 | 28 | - |
| Example 5 | 28 | - | Example 20 | 29 | - |
| Example 6 | 27 | - | Example 21 | 28 | - |
| Example 7 | 28 | - | Example 22 | 29 | - |
| Example 8 | 30 | - | Example 23 | 30 | - |
| Example 9 | 29 | - | Example 24 | 29 | - |
| Example 10 | 27 | - | Example 25 | 29 | - |
| Example 11 | 28 | - | Example 26 | 30 | - |
| Example 12 | 30 | - | Example 27 | 8 | 3,000 |
| Example 13 | 9 | 3,100 | Example 28 | 29 | - |
| Example 14 | 30 | - | Comparative Example 1 | 49 | - |
| Example 15 | 29 | - | Comparative Example 2 | 79 | - |

### [Synthesis Example 31]

50 Parts by weight of a silicone resin (product name: KE-1950-50A, manufactured by Shin-Etsu Chemical Co., Ltd.), 50parts by weight of another silicone resin (product name: KE-1950-50B, manufactured by Shin-Etsu Chemical Co., Ltd.), 200 parts by weight of a phosphate-based glass frit (product name: VY0053M, manufactured by Nippon Frit Co., Ltd.), and 128 parts by weight of toluene were added to a vessel including a stirring machine, and were stirred and mixed to provide a silicone resin composition (S-1).

### [Synthesis Example 32]

50 Parts by weight of a silicone resin (product name: KE-1950-50A, manufactured by Shin-EtsuChemical Co., Ltd.), 50parts by weight of another silicone resin (product name: KE-1950-50B, manufactured by Shin-Etsu Chemical Co., Ltd.), 200 parts by weight of a borosilicate-based glass frit (product name: CY5600, manufactured by Nippon Frit Co., Ltd.), and 128 parts by weight of toluene were added to a vessel including a stirring machine, and were stirred and mixed to provide a silicone resin composition (S-2) .

### [Synthesis Example 33]

50 Parts by weight of a silicone resin (product name: KE-1950-50A, manufactured by Shin-Etsu Chemical Co., Ltd.), 50 parts by weight of another silicone resin (product name: KE-1950-50B, manufactured by Shin-Etsu Chemical Co., Ltd.), and 128 parts by weight of toluene were added to a vessel including a stirring machine, and were stirred and mixed to provide a silicone resin composition (K) .

### [Example 29]

The silicone resin composition (S-1) obtained in Synthesis Example 31 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (29) was obtained. The results are shown in Table 3 and Table 4.

### [Example 30]

The silicone resin composition (S-2) obtained in Synthesis Example 32 was applied onto a polyethylene terephthalate film (thickness: 50 µm, product name: LUMIRRORS10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a flame retardant material (30) was obtained. The results are shown in Table 3 and Table 4.

### [Comparative Example 3]

The silicone resin composition (K) obtained in Synthesis Example 33 was applied onto a polyethylene terephthalate film (thickness: 50 µm, product name: LUMIRROR S10, manufactured by Toray Industries, Inc.) with an applicator manufactured by Tester Sangyo Co., Ltd. so that its thickness after drying became 100 µm. After that, the resultant was heated and dried in a hot air-circulating oven at 80°C for 2 minutes and at 110°C for 2 minutes, and the polyethylene terephthalate film was peeled. Thus, a material (C3) was obtained. The results are shown in Table 3 and Table 4.

**Table 3**

| | Combustion test | |
|---|---|---|
| | Shape | Strength |
| Example 29 | ○ | ○ |
| Example 30 | ○ | ○ |
| Comparative Example 3 | × | × |

**Table 4**

| | Weight loss (wt%) | Air permeability (second(s)) |
|---|---|---|
| Example 29 | 12 | 7, 000 |
| Example 30 | 12 | 7,500 |
| Comparative Example 3 | 28 | - |

### [Synthesis Example 34]

100 Parts by weight of an epoxy-based paint (product name: MILD SABI GUARD, manufactured by SK Kaken Co., Ltd.), 10 parts by weight of silica (product name: AEROSIL RX 200, manufactured by Nippon Aerosil Co., Ltd.), and 100 parts by weight of a glass frit (product name: VY0053M, manufactured by Nippon Frit Co., Ltd.) were added to a vessel including a stirring machine, and were stirred and mixed to provide a paint composition (A-1).

### [Synthesis Example 35]

100 Parts by weight of an epoxy-based paint (product name: MILD SABI GUARD, manufactured by SK Kaken Co., Ltd.), 10 parts by weight of silica (product name: AEROSIL RX 200, manufactured by Nippon Aerosil Co., Ltd.), and 200 parts by weight of a glass frit (product name: VY0053M, manufactured by Nippon Frit Co., Ltd.) were added to a vessel including a stirring machine, and were stirred and mixed to provide a paint composition (A-2).

### [Synthesis Example 36]

100 Parts by weight of an epoxy-based paint (product name: MILD SABI GUARD, manufactured by SK Kaken Co., Ltd.), 10 parts by weight of silica (product name: AEROSIL RX 200, manufactured by Nippon Aerosil Co., Ltd.), and 300 parts by weight of a glass frit (product name: VY0053M, manufactured by Nippon Frit Co., Ltd.) were added to a vessel including a stirring machine, and were stirred and mixed to provide a paint composition (A-3).

### [Synthesis Example 37]

100 Parts by weight of a urethane-based paint (product name: RETAN ECO BAKE, manufactured by Kansai Paint Co., Ltd.), 10 parts by weight of silica (product name: AEROSIL RX 200, manufactured by Nippon Aerosil Co., Ltd.), and 100 parts by weight of a glass frit (product name: VY0053M, manufactured by Nippon Frit Co., Ltd.) were added to a vessel including a stirring machine, and were stirred and mixed to provide a paint composition (B-1).

### [Synthesis Example 38]

100 Parts by weight of a urethane-based paint (product name: RETAN ECO BAKE, manufactured by SK Kaken Co., Ltd.), 10 parts by weight of silica (product name: AEROSIL RX 200, manufactured by Nippon Aerosil Co., Ltd.), and 200 parts by weight of a glass frit (product name: VY0053M, manufactured by Nippon Frit Co., Ltd.) were added to a vessel including a stirring machine, and were stirred and mixed to provide a paint composition (B-2).

### [Synthesis Example 39]

100 Parts by weight of a urethane-based paint (product name: RETAN ECO BAKE, manufactured by SK Kaken Co., Ltd.), 10 parts by weight of silica (product name: AEROSIL RX 200, manufactured by Nippon Aerosil Co., Ltd.), and 300 parts by weight of a glass frit (product name: VY0053M, manufactured by Nippon Frit Co., Ltd.) were added to a vessel including a stirring machine, and were stirred and mixed to provide a paint composition (B-3).

### [Synthesis Example 40]

100 Parts by weight of a fluorine-based paint (product name: SUPER O-DE FRESH F, manufactured by Nippon Paint Co., Ltd.), 10 parts by weight of silica (product name: AEROSIL RX 200, manufactured by Nippon Aerosil Co., Ltd.), and 100 parts by weight of a glass frit (product name: VY0053M, manufactured by Nippon Frit Co., Ltd.) were added to a vessel including a stirring machine, and were stirred and mixed to provide a paint composition (C-1).

### [Synthesis Example 41]

100 Parts by weight of a fluorine-based paint (product name: SUPER O-DE FRESH F, manufactured by Nippon Paint Co., Ltd.), 10 parts by weight of silica (product name: AEROSIL RX 200, manufactured by Nippon Aerosil Co., Ltd.), and 200 parts by weight of a glass frit (product name: VY0053M, manufactured by Nippon Frit Co., Ltd.) were added to a vessel including a stirring machine, and were stirred and mixed to provide a paint composition (C-2).

### [Synthesis Example 42]

100 Parts by weight of an acrylic paint (product name: NIPPE ROAD LINE 1000, manufactured by Nippon Paint Co., Ltd.), 10 parts by weight of silica (product name: AEROSIL RX 200, manufactured by Nippon Aerosil Co., Ltd.), and 100 parts by weight of a glass frit (product name: VY0053M, manufactured by Nippon Frit Co., Ltd.) were added to a vessel including a stirring machine, and were stirred and mixed to provide a paint composition (D-1).

### [Synthesis Example 43]

100 Parts by weight of an acrylic paint (product name: NIPPE ROAD LINE 1000, manufactured by Nippon Paint Co., Ltd.), 10 parts by weight of silica (product name: AEROSIL RX 200, manufactured by Nippon Aerosil Co., Ltd.), and 200 parts by weight of a glass frit (product name: VY0053M, manufactured by Nippon Frit Co., Ltd.) were added to a vessel including a stirring machine, and were stirred and mixed to provide a paint composition (D-2).

### [Synthesis Example 44]

100 Parts by weight of a silicone-based paint (product name: SUPER O-DE FRESH Si, manufactured by Nippon Paint Co., Ltd.) and 100 parts by weight of a glass frit (product name: VY0053M, manufactured by Nippon Frit Co. , Ltd.) were added to a vessel including a stirring machine, and were stirred and mixed to provide a paint composition (E-1).

### [Synthesis Example 45]

100 Parts by weight of a silicone-based paint (product name: SUPER O-DE FRESH Si, manufactured by Nippon Paint Co., Ltd.) and 200 parts by weight of a glass frit (product name: VY0053M, manufactured by Nippon Frit Co. , Ltd.) were added to a vessel including a stirring machine, and were stirred and mixed to provide a paint composition (E-2).

### [Example 31]

The paint composition (A-1) obtained in Synthesis Example 34 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (31) was obtained. The results are shown in Table 5 and Table 6.

### [Example 32]

The paint composition (A-2) obtained in Synthesis Example 35 was applied onto a polyethylene terephthalate film (thickness: 50 µm, product name: DIAFOIL MRS, manufactured by Mitsubishi Chemical Corporation) with an applicator manufactured by Tester Sangyo Co. , Ltd. so that its thickness after drying became 100 µm. After that, the resultant was heated and dried in a hot air-circulating oven at 100°C for 30 minutes, and the polyethylene terephthalate film was peeled. Thus, a flame retardant material (32) was obtained. The results are shown in Table 5 and Table 6.

### [Example 33]

The paint composition (A-3) obtained in Synthesis Example 36 was applied onto a polyethylene terephthalate film (thickness: 50 µm, product name: DIAFOIL MRS, manufactured by Mitsubishi Chemical Corporation) with an applicator manufactured by Tester Sangyo Co. , Ltd. so that its thickness after drying became 100 µm. After that, the resultant was heated and dried in a hot air-circulating oven at 100°C for 30 minutes, and the polyethylene terephthalate film was peeled. Thus, a flame retardant material (33) was obtained. The results are shown in Table 5 and Table 6.

### [Example 34]

The paint composition (B-1) obtained in Synthesis Example 37 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (34) was obtained. The results are shown in Table 5 and Table 6.

### [Example 35]

The paint composition (B-2) obtained in Synthesis Example 38 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (35) was obtained. The results are shown in Table 5 and Table 6.

### [Example 36]

The paint composition (B-3) obtained in Synthesis Example 39 was applied onto a polyethylene terephthalate film (thickness: 50 µm, product name: DIAFOIL MRS, manufactured by Mitsubishi Chemical Corporation) with an applicator manufactured by Tester Sangyo Co. , Ltd. so that its thickness after drying became 100 µm. After that, the resultant was heated and dried in a hot air-circulating oven at 100°C for 30 minutes, and the polyethylene terephthalate film was peeled. Thus, a flame retardant material (36) was obtained. The results are shown in Table 5 and Table 6.

### [Example 37]

The paint composition (C-1) obtained in Synthesis Example 40 was applied onto a polyethylene terephthalate film (thickness: 50 µm, product name: DIAFOIL MRF, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (37) was obtained. The results are shown in Table 5 and Table 6.

### [Example 38]

The paint composition (C-2) obtained in Synthesis Example 41 was applied onto a polyethylene terephthalate film (thickness: 50 µm, product name: DIAFOIL MRF, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (38) was obtained. The results are shown in Table 5 and Table 6.

### [Example 39]

The paint composition (D-1) obtained in Synthesis Example 42 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (39) was obtained. The results are shown in Table 5 and Table 6.

### [Example 40]

The paint composition (D-2) obtained in Synthesis Example 43 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (40) was obtained. The results are shown in Table 5 and Table 6.

### [Example 41]

The paint composition (E-1) obtained in Synthesis Example 41 was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a flame retardant material (41) was obtained. The results are shown in Table 5 and Table 6.

### [Example 42]

The paint composition (E-2) obtained in Synthesis Example 45 was applied onto a polyethylene terephthalate film (thickness: 50 µm, product name: DIAFOIL MRS, manufactured by Mitsubishi Chemical Corporation) with an applicator manufactured by Tester Sangyo Co. , Ltd. so that its thickness after drying became 100 µm. After that, the resultant was heated and dried in a hot air-circulating oven at 100°C for 30 minutes, and the polyethylene terephthalate film was peeled. Thus, a flame retardant material (42) was obtained. The results are shown in Table 5 and Table 6.

### [Comparative Example 4]

An epoxy-based paint (product name: MILD SABI GUARD, manufactured by SK Kaken Co., Ltd.) was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a material (C4) was obtained. The results are shown in Table 5 and Table 6.

### [Comparative Example 5]

A urethane-based paint (product name: RETAN ECO BAKE, manufactured by Kansai Paint Co., Ltd.) was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a material (C5) was obtained. The results are shown in Table 5 and Table 6.

### [Comparative Example 6]

A fluorine-based paint (product name: SUPER O-DE FRESH F, manufactured by Nippon Paint Co., Ltd.) was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a material (C6) was obtained. The results are shown in Table 5 and Table 6.

### [Comparative Example 7]

An acrylic paint (product name: NIPPE ROAD LINE 1000, manufactured by Nippon Paint Co., Ltd.) was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a material (C7) was obtained. The results are shown in Table 5 and Table 6.

### [Comparative Example 8]

A silicone-based paint (product name: SUPER O-DE FRESH Si, manufactured by Nippon Paint Co., Ltd.) was applied onto a polyethylene terephthalate film (thickness: 50 µm, product name: DIAFOIL MRS, manufactured by Mitsubishi Chemical Corporation) with an applicator manufactured by Tester Sangyo Co., Ltd. so that its thickness after drying became 100 µm. After that, the resultant was heated and dried in a hot air-circulating oven at 100°C for 30 minutes, and the polyethylene terephthalate film was peeled. Thus, a material (C8) was obtained. The results are shown in Table 5 and Table 6.

**Table 5**

| | Combustion test | | | Combustion test | |
|---|---|---|---|---|---|
| | Shape | Strength | | Shape | Strength |
| Example 31 | Δ | ○ | Comparative Example 4 | × | x |
| Example 32 | ○ | ○ | Comparative Example 5 | × | × |
| Example 33 | ○ | ○ | Comparative Example 6 | x | × |
| Example 34 | Δ | ○ | Comparative Example 7 | × | × |
| Example 35 | ○ | ○ | Comparative Example 8 | × | × |
| Example 36 | ○ | ○ | - | - | - |
| Example 37 | Δ | ○ | - | - | - |
| Example 38 | ○ | ○ | - | - | - |
| Example 39 | Δ | ○ | - | - | - |
| Example 40 | ○ | ○ | - | - | - |
| Example 41 | ○ | ○ | - | - | - |
| Example 42 | ○ | ○ | - | - | - |

**Table 6**

| | Weight loss (wt%) | Air permeability (second(s)) | | Weight loss (wt%) | Air permeability (second(s) ) |
|---|---|---|---|---|---|
| Example 31 | 15 | - | Comparative Example 4 | 51 | - |
| Example 32 | 9 | - | Comparative Example 5 | 61 | - |
| Example 33 | 6 | 6,000 | Comparative Example 6 | 59 | - |
| Example 34 | 23 | - | Comparative Example 7 | 51 | - |
| Example 35 | 20 | - | Comparative Example 8 | 50 | - |
| Example 36 | 12 | - | - | - | - |
| Example 37 | 22 | - | - | - | - |
| Example 38 | 20 | - | - | - | - |
| Example 39 | 13 | - | - | - | - |
| Example 40 | 10 | - | - | - | - |
| Example 41 | 20 | - | - | - | - |
| Example 42 | 14 | - | - | - | - |

### Industrial Applicability

The flame retardant material of the present invention may be suitably utilized as, for example, an interior member for a transporting machine, such as a railway vehicle, an aircraft, an automobile, a ship, an elevator, or an escalator (interior member for a transporting machine), an exterior member for a transporting machine, a building material member, a display member, a household electric appliance member, an electronic circuit member, or a lighting cover.

## Claims

1. A flame retardant material, comprising a resin composition (A) including a binder resin, a low-melting point inorganic substance, and a high-melting point inorganic substance.

2. The flame retardant material according to claim 1, wherein a content of the low-melting point inorganic substance with respect to 100 parts by weight of the binder resin is from 100 parts by weight to 500 parts by weight in terms of solid content.

3. The flame retardant material according to claim 1 or 2, wherein a content of the high-melting point inorganic substance with respect to 100 parts by weight of the binder resin is from 10 parts by weight to 100 parts by weight in terms of solid content.

4. The flame retardant material according to any one of claims 1 to 3, wherein a total content of the binder resin, the low-melting point inorganic substance, and the high-melting point inorganic substance in the resin composition (A) is from 80 wt% to 100 wt% in terms of solid content.

5. The flame retardant material according to any one of claims 1 to 4, wherein the flame retardant material is of a sheet shape having a thickness of from 20 µm to 3,000 µm.

6. The flame retardant material according to any one of claims 1 to 5, wherein the binder resin is at least one kind selected from a thermoplastic resin, a thermosetting resin, and a rubber.

7. The flame retardant material according to any one of claims 1 to 6, wherein the low-melting point inorganic substance is a glass frit.

8. The flame retardant material according to claim 7, wherein the glass frit is at least one kind selected from a phosphate-based glass frit, a borosilicate-based glass frit, and a bismuth-based glass frit.

9. The flame retardant material according to any one of claims 1 to 8, wherein the high-melting point inorganic substance is at least one kind selected from boron nitride, alumina, zinc oxide, titanium oxide, silica, barium titanate, calcium carbonate, glass beads, aluminum hydroxide, silicone powder, a glass balloon, a silica balloon, and talc.

10. A flame retardant material, comprising a resin composition (B) including a binder resin that produces a high-melting point inorganic substance when heated, and a low-melting point inorganic substance.

11. The flame retardant material according to claim 10, wherein a content of the low-melting point inorganic substance with respect to 100 parts by weight of the binder resin that produces the high-melting point inorganic substance when heated is from 100 parts by weight to 500 parts by weight in terms of solid content.

12. The flame retardant material according to claim 10 or 11, wherein a total content of the binder resin that produces the high-melting point inorganic substance when heated, and the low-melting point inorganic substance in the resin composition (B) is from 80 wt% to 100 wt% in terms of solid content.

13. The flame retardant material according to any one of claims 10 to 12, wherein the flame retardant material is of a sheet shape having a thickness of from 20 µm to 3,000 µm.

14. The flame retardant material according to any one of claims 10 to 13, wherein the binder resin that produces the high-melting point inorganic substance when heated is a silicone resin.

15. The flame retardant material according to any one of claims 10 to 14, wherein the low-melting point inorganic substance is a glass frit.

16. The flame retardant material according to claim 15, wherein the glass frit is at least one kind selected from a phosphate-based glass frit, a borosilicate-based glass frit, and a bismuth-based glass frit.
